(19) Europäisches Patentamt
European Patent Office
Office européen des brevets

(11) EP 1 813 629 A1

(12) # EUROPÄISCHE PATENTANMELDUNG

(43) Veröffentlichungstag:
**01.08.2007 Patentblatt 2007/31**

(51) Int Cl.:
***C08F 212/00*** *(2006.01)* ***C08F 236/04*** *(2006.01)*
***C08F 2/22*** *(2006.01)*

(21) Anmeldenummer: **06100835.5**

(22) Anmeldetag: **25.01.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **BASF Aktiengesellschaft**
**67056 Ludwigshafen (DE)**

(72) Erfinder:
- **Birkert, Oliver**
  **67163, Fussgönnheim (DE)**
- **Göthlich, Alexander**
  **68163, Mannheim (DE)**
- **Schröder, Hartwig**
  **69226, Nußloch (DE)**
- **Zelder, Oskar**
  **67346, Speyer (DE)**
- **Haefner, Stefan**
  **67643, Speyer (DE)**
- **Evstatieva, Elitsa**
  **68159, Mannheim (DE)**

(54) **Verfahren zur Herstellung einer stabilen, aconitsäurehaltigen wässrigen Copolymerisatdispersion**

(57) Verfahren zur Herstellung von wässrigen Dispersionen aconitsäurehaltiger Copolymerisate durch radikalisch initiierte wässrige Emulsionspolymerisation.

EP 1 813 629 A1

## Beschreibung

Gegenstand der vorliegenden Erfindung ist ein Verfahren zur Herstellung einer stabilen wässrigen Copolymerisatdispersion durch radikalisch initiierte wässrige Emulsionspolymerisation in einem Polymerisationsgefäß, welches dadurch gekennzeichnet ist, dass zur Emulsionspolymerisation ein Monomerengemisch, bestehend aus

| | |
|---|---|
| 0,1 bis 10 Gew.-% | Aconitsäure [Monomer A1], |
| 14,9 bis 80 Gew.-% | wenigstens eines konjugierten aliphatischen C4-C9-Diens [Monomer A2], und |
| 19,9 bis 85 Gew.-% | wenigstens einer vinylaromatischen Verbindung [Monomer A3], sowie gegebenenfalls |
| 0 bis 30 Gew.-% | wenigstens einer weiteren, sich von den Monomeren A1, A2 und A3 unterscheidenden radikalisch copolymerisierbaren ethylenisch ungesättigten Verbindung [Monomer A4] |

eingesetzt wird und sich die Monomeren A1 bis A4 zu 100 Gew.-% addieren.

Gegenstand der vorliegenden Erfindung sind ebenfalls die nach dem erfindungsgemä-ßen Verfahren zugänglichen wässrigen Copolymerisatdispersionen und deren Verwendung in verschiedenen Einsatzgebieten.

Die Durchführung von radikalisch initiierten Emulsionspolymerisationen von ethylenisch ungesättigten Monomeren in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch induzierte wässrige Emulsionspolymerisationsreaktionen erfolgen üblicherweise dergestalt, dass man die ethylenisch ungesättigten Monomere unter Mitverwendung von Dispergier-hilfsmitteln, im wässrigen Medium in Form von Monomerentröpfchen dispers verteilt und mittels eines radikalischen Polymerisationsinitiators polymerisiert. Von dieser Verfahrensweise unterscheidet sich das vorliegende Verfahren insbesondere durch die Verwendung eines spezifischen Monomerengemisches.

Im Stand der Technik finden sich eine Vielzahl von Verfahren zur Herstellung wässriger Styrol/Butadien-Dispersionen, wobei als copolymerisierbare, ethylenisch ungesättigte Carbonsäuren in der Regel Acrylsäure und Methacrylsäure eingesetzt werden (siehe beispielsweise DE-A 100 46 930, DE-A 101 48 494, DE-A 101 48 496, DE-A 101 48 497, DE-A 101 48 511 oder EP-A 496 925). Die nach diesen Verfahren erhaltenen wässrigen Copolymerisatdispersionen weisen in der Regel verhältnismäßig hohe Viskositätswerte auf.

Aufgabe der vorliegenden Erfindung war die Bereitstellung eines neuen Verfahrens zur Herstellung von wässrigen Dispersionen aconitsäurehaltiger Copolymerisate, enthaltend als Hauptmonomere in einpolymerisierter Form wenigstens ein konjugiertes aliphatisches C4-C9-Dien und wenigstens eine vinylaromatische Verbindung, durch radikalisch initiierte wässrige Emulsionspolymerisation, welches sich durch niedrigere Viskositätswerte der erhaltenen wässrigen Copolymerisatdispersionen auszeichnet.

Überraschender Weise wurde die Aufgabe durch das eingangs definierte Verfahren gelöst.

Im vorliegenden erfindungsgemäßen Verfahren wird Wasser, bevorzugt Trinkwasser und insbesondere bevorzugt entionisiertes Wasser verwendet, dessen Gesamtmenge so bemessen wird, dass sie 30 bis 90 Gew.-% und vorteilhaft 40 bis 60 Gew.-%, jeweils bezogen auf die durch das erfindungsgemäße Verfahren zugängliche wässrige Copolymerisatdispersion, beträgt.

Erfindungsgemäß ist es möglich, gegebenenfalls eine Teil- oder die Gesamtmenge an Wasser im Polymerisationsgefäß vorzulegen. Es ist aber auch möglich, die Gesamtmenge oder die gegebenenfalls verbliebene Restmenge an Wasser gemeinsam mit dem Monomerengemisch, insbesondere in Form einer wässrigen Monomerenemulsion zuzudosieren. Mit Vorteil wird eine kleine Teilmenge an Wasser im Polymerisationsgefäß vorgelegt und eine größere Teilmenge an Wasser in Form einer wässrigen Monomerenemulsion unter Polymerisationsbedingungen zudosiert.

Im Rahmen des erfindungsgemäßen Verfahrens werden Dispergierhilfsmittel mitverwendet, die sowohl die Monomerentröpfchen als auch die gebildeten Copolymerisatteilchen in der wässrigen Phase dispers verteilt halten und so die Stabilität der erzeugten wässrigen Copolymerisatdispersion gewährleisten. Als solche kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961.

Selbstverständlich können auch Gemische aus Emulgatoren und/oder Schutzkolloiden verwendet werden. Häufig werden als Dispergierhilfsmittel ausschließlich Emulgatoren eingesetzt, deren relative Molekulargewichte im

Unterschied zu den Schutzkolloiden üblicherweise unter 1000 g/mol liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind.

Gebräuchliche Emulgatoren sind z.B. ethoxilierte Mono-, Di- und Tri-Alkylphenole (EO-Grad: 3 bis 50, Alkylrest: $C_4$ bis $C_{12}$), ethoxilierte Fettalkohole (EO-Grad: 3 bis 50; Alkylrest: $C_8$ bis $C_{36}$) sowie Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxilierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Als grenzflächenaktive Substanzen haben sich ferner Verbindungen der allgemeinen Formel I

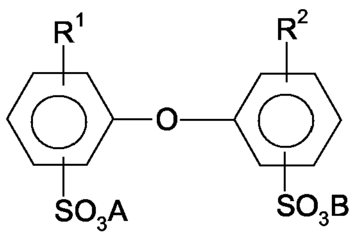

(I)

worin $R^1$ und $R^2$ $C_4$- bis $C_{24}$-Alkyl bedeuten und einer der Reste $R^1$ oder $R^2$ auch für Wasserstoff stehen kann, und A und B Alkalimetallionen und/oder Ammoniumionen sein können, erwiesen. In der allgemeinen Formel I bedeuten $R^1$ und $R^2$ bevorzugt lineare oder verzweigte Alkylreste mit 6 bis 18 C-Atomen, insbesondere mit 6, 12 und 16 C-Atomen oder H-Atome, wobei $R^1$ und $R^2$ nicht beide gleichzeitig H-Atome sind. A und B sind bevorzugt Natrium-, Kalium- oder Ammoniumionen, wobei Natriumionen besonders bevorzugt sind. Besonders vorteilhaft sind Verbindungen I, in denen A und B Natriumionen, $R^1$ ein verzweigter Alkylrest mit 12 C-Atomen und $R^2$ ein H-Atom oder $R^1$ sind. Häufig werden technische Gemische verwendet, die einen Anteil von 50 bis 90 Gew.-% des monoalkylierten Produktes aufweisen, beispielsweise Dowfax® 2A1 (Marke der Dow Chemical Company). Die Verbindungen I sind allgemein bekannt, z.B. aus US-A 4,269,749, und im Handel erhältlich.

Bevorzugt werden für das erfindungsgemäße Verfahren nichtionische und/oder anionische Dispergierhilfsmittel verwendet. Es können jedoch auch kationische Dispergierhilfsmittel eingesetzt werden.

In der Regel beträgt die Menge an eingesetztem Dispergierhilfsmittel 0,1 bis 5 Gew.-%, bevorzugt 0,5 bis 3 Gew.-%, jeweils bezogen auf die Gesamtmonomerenmenge.

Erfindungsgemäß ist es möglich, gegebenenfalls eine Teil- oder die Gesamtmenge an Dispergierhilfsmittel im Polymerisationsgefäß vorzulegen. Es ist aber auch möglich, die Gesamtmenge oder die gegebenenfalls verbliebene Restmenge an Dispergierhilfsmittel gemeinsam mit dem Monomerengemisch, insbesondere in Form einer wässrigen Monomerenemulsion unter Polymerisationsbedingungen zuzudosieren.

Erfindungsgemäß werden 0,1 bis 10 Gew.-%, bezogen auf die Gesamtmonomerenmenge an Monomer A1 eingesetzt. Vorteilhaft werden ≥ 0,2 Gew.-%, insbesondere vorteilhaft ≥ 0,3 Gew.-% oder ≥ 0,5 Gew.-% sowie ≤ 5 Gew.-%, insbesondere vorteilhaft ≤ 3 Gew.-% oder ≤ 2 Gew.-% an Monomer A1 eingesetzt. Mit Vorteil beträgt die Menge an Monomer A1 ≥ 0,3 und ≤ 3 Gew.-%, bezogen auf die Gesamtmonomerenmenge. Erfindungswesentlich ist, dass Monomer A1 dem Polymerisationsgefäß als Bestandteil des Monomerengemisches parallel gemeinsam mit den Monomeren A2 bis A4 zudosiert wird.

Von Bedeutung für das vorliegende Verfahren ist ferner, dass unter Monomer A1 sowohl die cis-Aconitsäure wie auch die trans-Aconitsäure und Gemische aus cis-Aconitsäure und trans-Aconitsäure verstanden werden.

Als Monomer A2 geeignete aliphatische konjugierte Diene mit 4 bis 9 Kohlenstoffatomen sind das 1,3-Butadien sowie substituierte Butadiene, wie beispielsweise das 2-Chlor- bzw. das 2-Methyl-1,3-butadien. Ferner eignen sich konjugierte, gerad- und verzweigtkettige Pentadiene und Hexadiene sowie weitere gerad- oder verzweigtkettige konjugierte Diene mit bis zu 9 Kohlenstoffatomen. Selbstverständlich können auch Gemische verschiedener aliphatischer Diene eingesetzt werden. Aus Gründen der Wirtschaftlichkeit und der vorteilhaften Eigenschaften in Copolymerisaten ist das 1,3-Butadien besonders bevorzugt. Erfindungswesentlich ist, dass das wenigstens eine Monomere A2 dem Polymerisationsgefäß als Bestandteil des Monomerengemisches parallel gemeinsam mit den Monomeren A1, A3 und A4 zudosiert wird.

Die Gesamtmenge an Monomeren A2 in der Monomerenmischung beträgt 14,9 bis 80 Gew.-%, häufig 20 bis 60 Gew.% und oft 25 bis 50 Gew.-%.

Als Monomer A3 geeignete vinylaromatische Verbindungen im Sinne der Erfindung sind Monomere der allgemeinen Formel $CH_2=CR^1R^2$, wobei $R^1$ ein aromatischer Kern mit 6 bis 10 Kohlenstoffatomen ist, der auch weitere Alkylreste und/oder Halogensubstituenten enthalten kann. $R^2$ ist Wasserstoff oder ein Alkylrest mit 1 bis 4 Kohlenstoffatomen. Bevorzugte aromatische Monovinylverbindungen sind aus Gründen der Wirtschaftlichkeit und Verfügbarkeit Styrol, α-Methylstyrol und Vinyltoluol, wobei Styrol besonders bevorzugt ist. Selbstverständlich können auch Gemische verschiedener Monomere A3 eingesetzt werden. Erfindungswesentlich ist, dass das wenigstens eine Monomere A3 dem Polymerisationsgefäß als Bestandteil des Monomerengemisches parallel gemeinsam mit den Monomeren A1, A2 und A4 zudosiert wird.

Die Gesamtmenge an Monomeren A3 in der Monomerenmischung beträgt 19,9 bis 85 Gew.-%, häufig 30 bis 75 Gew.% und oft 40 bis 70 Gew.-%.

Zur Herstellung der erfindungsgemäßen wässrigen Copolymerisatdispersionen kommt als wenigstens ein Monomer A4 insbesondere in einfacher Weise mit den Monomeren A1 bis A3 radikalisch copolymerisierbare ethylenisch ungesättigte Verbindungen in Betracht, wie beispielsweise Ethylen, Vinyl halogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, - octyl-, -nonyl-, -decyl- und -2-ethylhexylester, Fumar- und Maleinsäuredimethylester oder -di-n-butylester sowie Nitrile α,β-monoethylenisch ungesättigter Carbonsäuren, wie Acrylnitril, Methacrylnitril, Fumarsäuredinitril, Maleinsäuredinitril. In aller Regel weisen diese Monomeren in Wasser bei Normalbedingungen [20 °C, 1 atm (absolut)] lediglich eine mäßige bis geringe Löslichkeit auf.

Monomere A4, die unter den vorgenannten Bedingungen eine erhöhte Wasserlöslichkeit aufweisen, sind solche, die entweder wenigstens eine Säuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien 3 bis 6 C-Atome aufweisende α,β-monoethylenisch ungesättigte Mono- und Dicarbonsäuren und deren Amide, wie z.B. Acrylsäure, Methacrylsäure, Maleinsäure, Fumarsäure, Itaconsäure, Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino) ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat.

Monomere A4, die üblicherweise die innere Festigkeit der Verfilmungen einer Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl-und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat.

Mit Vorteil werden als Monomere A4 Acrylsäure und/oder Methacrylsäure eingesetzt.

Die Gesamtmenge an optional eingesetzten Monomeren A4 in der Monomerenmischung beträgt bis 30 Gew.-%, häufig 2 bis 20 Gew.-% und oft 3 bis 10 Gew.-%.

Erfindungsgemäß wesentlich ist, dass die Monomeren A1 bis A4 in Form eines Monomerengemisches eingesetzt werden. Dabei soll als Monomerengemisch verstanden werden, wenn ≥ 70 Gew.-%, bevorzugt ≥ 80 Gew.-% und insbesondere bevorzugt ≥ 90 Gew.-% oder sogar die Gesamtmengen der jeweiligen Monomeren A1 bis A4 gemeinsam parallel dem Polymerisationsgefäß zugeführt werden. Hierbei ist es unerheblich, ob die einzelnen Monomeren über separate Zulaufleitungen zugeführt werden und die Mischung im Polymerisationsgefäß erfolgt oder ob die einzelnen Monomeren über eine gemeinsame Zulaufleitung dem Polymerisationsgefäß zugeführt werden. Häufig werden die Monomeren A1, A3 und A4 gemeinsam über eine Zulaufleitung und Monomer A2, insbesondere wenn 1,3-Butadien

eingesetzt wird, parallel über eine separate Zulaufleitung zudosiert. Vorteilhaft werden jedoch die Monomeren A1 bis A4 parallel über eine Zulaufleitung eindosiert. Insbesondere vorteilhaft wird das Monomerengemisch in Form einer wässrigen Monomerenemulsion eingesetzt.

Die Herstellung des Monomerengemisches bzw. einer das Monomerengemisch enthaltenden wässrigen Monomerenemulsion ist dem Fachmann geläufig und erfolgt beispielsweise dergestalt, dass die entsprechenden Komponenten (wie beispielsweise die Monomeren A1 bis A4, entionisiertes Wasser, Dispergierhilfsmittel sowie optional weitere Hilfsstoffe) in einem Mischbehälter vorgelegt und homogen gemischt werden. Selbstverständlich ist es auch möglich das Monomerengemisch bzw. eine das Monomerengemisch enthaltende wässrige Monomerenemulsion kontinuierlich nach Maßgabe des Verbrauchs durch Mischen der entsprechenden Komponenten mittels statischen und/oder dynamischen Mischeinrichtungen herzustellen.

Die Auslösung der radikalisch initiierten wässrigen Emulsionspolymerisation erfolgt mittels eines radikalischen Polymerisationsinitiators (Radikalinitiator). Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder DiCumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/ oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium-und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten Radikalinitiators, bezogen auf die Gesamtmonomerenmenge, 0,01 bis 5 Gew.-%, bevorzugt 0,1 bis 3 Gew.-% und insbesondere bevorzugt 0,2 bis 1,5 Gew.-%.

Erfindungsgemäß ist es möglich, gegebenenfalls eine Teil- oder die Gesamtmenge an Radikalinitiator im Polymerisationsgefäß vorzulegen. Es ist aber auch möglich, die Gesamtmenge oder die gegebenenfalls verbliebene Restmenge an Radikalinitiator dem Polymerisationsgefäß unter Polymerisationsbedingungen zuzudosieren.

Erfindungsgemäß können auch weitere, dem Fachmann geläufige optionale Hilfsstoffe, wie beispielsweise sogenannte Verdicker, Entschäumer, Neutralisationsmittel, Konservierungsmittel, radikalkettenübertragende Verbindungen und/oder Komplexiermittel eingesetzt werden.

Um die Rheologie der erfindungsgemäß zugänglichen wässrigen Copolymerisatdispersionen bei Herstellung, Handling, Lagerung und Applikation optimal einzustellen, werden häufig sogenannte Verdicker oder Rheologieadditive als Formulierungsbestandteil eingesetzt. Dem Fachmann sind eine Vielzahl unterschiedlicher Verdicker bekannt, beispielsweise organische Verdicker, wie Xanthanverdicker, Guarverdicker (Polysaccharide), Carboxymethylcellulose, Hydroxyethylcellulose, Methylcellulose, Hydroxypropylmethylcellulose, Ethylhydroxyethylcellulose (Cellulosederivate), alkaliquellbare Dispersionen (Acrylatverdicker) oder hydrophob modifizierte, polyetherbasierte Polyurethane (Polyurethanverdicker) oder anorganische Verdicker, wie Bentonit, Hectorit, Smectit, Attapulgit (Bentone) sowie Titanate oder Zirkonate (Metallorganyle).

Um die Schaumbildung bei Herstellung, Handling, Lagerung und Applikation der erfindungsgemäß zugänglichen wässrigen Copolymerisatdispersionen zu vermeiden, finden sogenannte Entschäumer Verwendung. Die Entschäumer sind dem Fachmann geläufig. Es handelt sich hierbei im wesentlichen um Mineralöl- und die Silikonölentschäumer. Entschäumer, vor allem die hochaktiven silikonhaltigen, sind generell sehr sorgfältig auszuwählen und zu dosieren, da sie zu Oberflächendefekten (Krater, Dellen etc.) der Beschichtung führen können. Wesentlich ist, dass durch Zusatz von feinstteiligen, hydrophoben Partikeln, beispielsweise hydrophobe Kieselsäure oder Wachspartikel, in die Entschäumerflüssigkeit, die Entschäumerwirkung noch gesteigert werden kann.

Falls erforderlich, können dem Fachmann als Neutralisationsmittel geläufige Säuren oder Basen zur pH-Werteinstellung der erfindungsgemäß zugänglichen wässrigen Copolymerisatdispersionen verwendet werden.

Um den Befall der erfindungsgemäß zugänglichen wässrigen Copolymerisatdispersionen bei Herstellung, Handling, Lagerung und Applikation durch Mikroorganismen, wie beispielsweise Bakterien, (Schimmel)Pilzen oder Hefen zu vermeiden, werden häufig dem Fachmann geläufige Konservierungsmittel oder Biozide eingesetzt. Dabei finden insbesondere Wirkstoffkombinationen aus Methyl- und Chlorisothiazolinonen, Benzisothiazolinonen, Formaldehyd bzw. formaldehydabspaltende Agenzien Verwendung.

Neben den vorgenannten Komponenten können im erfindungsgemäßen Verfahren zur Herstellung der wässrigen Copolymerisatdispersionen optional auch radikalkettenübertragende Verbindungen eingesetzt werden, um das Molekulargewicht der durch die Polymerisation zugänglichen Copolymerisate zu reduzieren bzw. zu kontrollieren. Dabei kommen im wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd edtition, 1989, J. Brandrup und E.H. Immergut, John Weley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Vorteilhaft werden tert.-Dodecylmercaptan, 2,4-Diphenyl-4-methyl-1-penten sowie Terpinolen (siehe beispielsweise DE-A 100 46 930 oder DE-A 101 48 511) eingesetzt.

Die Gesamtmenge der weiteren optionalen Hilfsstoffe, bezogen auf die Gesamtmonomerenmenge, ist in der Regel ≤ 10 Gew.-%, ≤ 5 Gew.-%, oft ≤ 3 Gew.-% und häufig ≤ 2 Gew.-%.

Erfindungsgemäß ist es möglich, gegebenenfalls Teil- oder Gesamtmengen an weiteren optionalen Hilfsstoffen im Polymerisationsgefäß vorzulegen. Es ist aber auch möglich, Gesamtmengen oder die gegebenenfalls verbliebenen Restmengen an weiteren optionalen Hilfsstoffen unter Polymerisationsbedingungen, gegebenenfalls als Bestandteil des Monomerengemisches bzw. der dieses enthaltenden wässrigen Monomerenemulsion zuzudosieren.

Optional kann die erfindungsgemäße radikalisch initiierte wässrige Emulsionspolymerisation auch in Anwesenheit einer Polymersaat, beispielsweise in Anwesenheit von 0,01 bis 10 Gew.-%, häufig von 0,01 bis 5 Gew.-% und oft von 0,04 bis 3,5 Gew.-% einer Polymersaat, jeweils bezogen auf die Gesamtmonomerenmenge, erfolgen.

Eine Polymersaat wird insbesondere dann eingesetzt, wenn die Teilchengröße der mittels radikalisch wässriger Emulsionspolymerisation herzustellender Polymerpartikel gezielt eingestellt werden soll (siehe hierzu beispielsweise US-A 2,520,959 und US-A 3,397,165).

Insbesondere werden Polymersaatpartikel eingesetzt, deren Teilchengrößenverteilung eng und deren gewichtsmittlerer Durchmesser $D_w$ ≤ 100 nm, häufig ≥ 5 nm bis ≤ 50 nm und oft ≥ 15 nm bis ≤ 35 nm ist. Die Bestimmung der gewichtsmittleren Teilchendurchmesser ist dem Fachmann bekannt und erfolgt beispielsweise über die Methode der Analytischen Ultrazentrifuge. Unter gewichtsmittlerem Teilchendurchmesser wird in dieser Schrift der nach der Methode der Analytischen Ultrazentrifuge ermittelte gewichtsmittlere $D_{w50}$-Wert verstanden (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Unter enger Teilchengrößenverteilung soll im Rahmen dieser Schrift verstanden werden, wenn das Verhältnis der nach der Methode der Analytischen Ultrazentrifuge ermittelten gewichtsmittleren Teilchendurchmesser $D_{w50}$ und zahlenmittleren Teilchendurchmesser $D_{N50}$ [$D_{w50}/D_{N50}$] ≤ 2,0, bevorzugt ≤ 1,5 und insbesondere bevorzugt ≤ 1,2 oder ≤ 1,1 ist.

Üblicherweise wird die Polymersaat in Form einer wässrigen Polymerisatdispersion eingesetzt. Die vorgenannten Mengenangaben beziehen sich dabei auf den Polymerisatfeststoffanteil der wässrigen Polymersaatdispersion; sie sind daher als Gew.-Teile Polymersaatfeststoff, bezogen auf die Gesamtmonomerenmenge, angegeben.

Wird eine Polymersaat verwendet, so wird vorteilhaft eine Fremdpolymersaat eingesetzt. Im Unterschied zu einer sogenannten in situ-Polymersaat, welche vor Beginn der eigentlichen Emulsionspolymerisation im Reaktionsgefäß hergestellt wird und welche die gleiche monomere Zusammensetzung aufweist wie das durch die nachfolgende radikalisch initiierte wässrige Emulsionspolymerisation hergestellte Polymerisat, wird unter einer Fremdpolymersaat eine Polymersaat verstanden, die in einem separaten Reaktionsschritt hergestellt wurde und deren monomere Zusammensetzung von dem durch die radikalisch initiierte wässrige Emulsionspolymerisation hergestellten Polymerisat verschieden ist, was jedoch nichts anderes bedeutet, als dass zur Herstellung der Fremdpolymersaat und zur Herstellung der wässrigen Polymerisatdispersion unterschiedliche Monomere bzw. Monomerenmischungen mit unterschiedlicher Zusammensetzung eingesetzt werden. Die Herstellung einer Fremdpolymersaat ist dem Fachmann geläufig und erfolgt üblicherweise dergestalt, dass eine relativ kleine Menge an Monomeren sowie eine relativ große Menge an Emulgatoren in einem Reaktionsgefäß vorgelegt und bei Reaktionstemperatur eine ausreichende Menge an Polymerisationsinitiator

zugegeben wird.

Erfindungsgemäß bevorzugt wird eine Polymerfremdsaat mit einer Glasübergangstemperatur ≥ 50 °C, häufig ≥ 60 °C oder ≥ 70 °C und oft ≥ 80 °C oder ≥ 90 °C eingesetzt. Insbesondere bevorzugt ist eine Polystyrol- oder eine Polymethylmethacrylat-Polymersaat.

Erfindungsgemäß ist es möglich, gegebenenfalls eine Teil- oder die Gesamtmenge an Fremdpolymersaat als weiteren optionalen Hilfsstoff im Polymerisationsgefäß vorzulegen. Es ist aber auch möglich, die Gesamtmenge oder die gegebenenfalls verbliebene Restmengen an Fremdpolymersaat unter Polymerisationsbedingungen zuzudosieren.

Unter Polymerisationsbedingungen sind diejenigen Temperaturen und Drücke zu verstehen, unter denen die radikalisch initiierte wässrige Emulsionspolymerisation mit ausreichender Polymerisationsgeschwindigkeit verläuft. Diese ist jedoch insbesondere abhängig vom verwendeten Radikalinitiator. Vorteilhaft werden Art und Menge des Radikalinitiators, Polymerisationstemperatur und Polymerisationsdruck so ausgewählt, dass der Radikalinitiator eine Halbwertszeit ≤ 3 Stunden, insbesondere vorteilhaft ≤ 1 Stunde und ganz besonders vorteilhaft ≤ 30 Minuten aufweist.

Abhängig vom gewählten Radikalinitiator kommt als Reaktionstemperatur für die erfindungsgemäße radikalische wässrige Emulsionspolymerisation der gesamte Bereich von 0 bis 170 °C in Betracht. Dabei werden in der Regel Temperaturen von 50 bis 150 °C, insbesondere 60 bis 130°C und vorteilhaft 70 bis 120 °C angewendet. Die erfindungsgemäße radikalische wässrige Emulsionspolymerisation kann bei einem Druck kleiner, gleich oder größer 1 atm (= 1,013 bar absolut) durchgeführt werden, so dass die Polymerisationstemperatur 100°C übersteigen und bis zu 170 °C betragen kann. Vorzugsweise wird in Anwesenheit von leichtflüchtigen Monomeren, wie beispielsweise Ethylen, Butadien oder Vinylchlorid unter erhöhtem Druck polymerisiert. Dabei kann der Druck 1,2, 1,5, 2, 5, 10, 15 bar (absolut) oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die erfindungsgemäße radikalische wässrige Emuslionspolymerisation bei erhöhtem Druck unter Inertgasatmosphäre, wie beispielsweise unter Stickstoff oder Argon durchgeführt.

In der Regel erfolgt das erfindungsgemäße Verfahren dergestalt, dass im Polymerisationsgefäß bei 20 bis 25 °C (Raumtemperatur) unter Inertgasatmospäre eine Teilmenge des entionisierten Wassers, des Dispergierhilfsmittels sowie gegebenenfalls eine Teilmenge des Monomerengemisches und des Radikalinitiators vorgelegt werden, daran anschließend das Vorlagengemisch unter Rühren auf die geeignete Polymerisationstemperatur aufgeheizt wird und danach die Restmengen an entionisiertem Wasser und Dispergierhilfsmittel sowie die Gesamtmengen bzw. die gegebenenfalls verbliebene Restmengen an Monomerengemisch und Radikalinitiator zudosiert werden. Dabei kann die Dosierung des Monomerengemisches, des Radikalinitiators sowie der anderen Komponenten diskontinuierlich in mehreren Teilmengen sowie kontinuierlich mit gleichbleibenden oder sich ändernden Mengenströmen erfolgen. Mit Vorteil erfolgt die Dosierung kontinuierlich mit gleichbleibenden Mengenströmen.

Im erfindungsgemäßen Verfahren können prinzipiell auch noch geringe Mengen (≤10 Gew.-% bezogen auf die Gesamtmonomerenmenge) an wasserlöslichen organischen Lösungsmitteln, wie beispielsweise Methanol, Ethanol, Isopropanol, Butanole, Pentanole, aber auch Aceton etc. eingesetzt werden. Bevorzugt wird das erfindungsgemäße Verfahren jedoch in Abwesenheit solcher Lösungsmittel durchgeführt.

Durch gezielte Variation von Art und Menge der Monomeren A1 [cis- und/oder trans-Aconitsäure] und A2 bis A4 ist es dem Fachmann erfindungsgemäß möglich, wässrige Coolymerisatdispersionen herzustellen, deren Copolymerisate eine Glasübergangstemperatur bzw. einen Schmelzpunkt im Bereich von -80 bis 100 °C aufweisen. Abhängig vom gewünschten Einsatzzweck beträgt die Glasübergangstemperatur beispielsweise ≥ -50 bis ≤ 80 °C oder ≥ -10 bis ≤ 50 °C oder ≥ -5 bis ≤ 35 °C.

Mit der Glasübergangstemperatur Tg, ist der Grenzwert der Glasübergangstemperatur gemeint, dem diese gemäß G. Kanig (Kolloid-Zeitschrift & Zeitschrift für Polymere, Bd. 190, S. 1, Gleichung 1) mit zunehmendem Molekulargewicht zustrebt. Die Glasübergangstemperatur bzw. der Schmelzpunkt wird nach dem DSC-Verfahren ermittelt (Differential Scanning Calorimetry, 20 K/min, midpoint-Messung, DIN 53765).

Nach Fox (T.G. Fox, Bull. Am. Phys. Soc. 1956 [Ser. II] 1, Seite 123 und gemäß Ull-mann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + \ldots. x^n/T_g^n,$$

wobei $x^1$, $x^2$, .... $x^n$ die Massenbrüche der Monomeren 1, 2, .... n und $Tg^1$, $Tg^2$,.... $T_g^n$ die Glasübergangstemperaturen der jeweils nur aus einem der Monomeren 1, 2, .... n aufgebauten Polymerisaten in Grad Kelvin bedeuten. Die Tg-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd

Ed. J.Wiley, New York 1975, und 3rd Ed. J. Wiley, New York 1989).

Die nach dem erfindungsgemäßen Verfahren zugänglichen wässrigen Copolymerisatdispersionen weisen oft Copolymerisate auf, deren Mindestfilmbildetemperatur MFT < 80 °C häufig ≤ 50 °C oder ≤ 35 °C beträgt. Da die MFT unterhalb 0 °C nicht mehr messbar ist, kann die untere Grenze der MFT nur durch die Tg-Werte angegeben werden. Die Bestimmung der MFT erfolgt nach DIN 53787.

Die erhaltene wässrige Copolymerisatdispersion weist üblicherweise einen Polymerisatfeststoffgehalt von ≥ 10 und ≤ 70 Gew.-%, häufig ≥ 20 und ≤ 65 Gew.-% und oft ≥ 40 und ≤ 60 Gew.-%, jeweils bezogen auf die wässrige Copolymerisatdispersion, auf. Der über quasielastische Lichtstreuung (ISO-Norm 13 321) ermittelte zahlenmittlere Teilchendurchmesser (cumulant z-average) liegt in der Regel zwischen 10 und 2000 nm, häufig zwischen 20 und 500 nm und oft zwischen 70 und 300 nm bzw. 80 bis 200 nm.

Vorteilhaft an vorliegendem Verfahren ist, dass die Restgehalte an Monomeren A2 bis A4 in den erfindungsgemäß erhaltenen wässrigen Copolymerisatdispersionen im Vergleich zu den nach den Verfahren des Standes der Technik erhaltenen wässrigen Copolymerisatdispersionen - auch ohne Restmonomerenentfernung - in der Regel deutlich geringer sind. Desweiteren zeichnen sich die erfindungsgemäß erhaltenen wässrigen Copolymerisatdispersionen durch in der Regel niedrigere Viskositätswerte im Vergleich zu den wässrigen Copolymerisatdispersionen des Standes der Technik aus. Ebenfalls vorteilhaft ist, dass sich Teil- oder Gesamtmengen an Acrylsäure und Methacrylsäure, welche bei den wässrigen Copolymerisatdispersionen des Standes der Technik häufig eingesetzt werden, durch Monomer A1 ersetzen lassen, ohne dass sich die anwendungstechnische Eigenschaften der erfindungsgemäß erhaltenen wässrigen Copolymerisatdispersionen von den wässrigen Copolymerisatdispersionen des Standes der Technik unvorteilhaft abweichen.

Selbstverständliche können jedoch auch bei den erfindungsgemäß erhaltenen wässrigen Copolymerisatdispersionen die verbleibenden Restgehalte an nicht umgesetzten Monomeren A1 bis A4 sowie anderen leichtsiedenden Verbindungen durch dem Fachmann ebenfalls bekannte chemische und/oder physikalische Methoden [siehe beispielsweise EP-A 771 328, DE-A 196 24 299, DE-A 196 21 027, DE-A 197 41 184, DE-A 197 41 187, DE-A 198 05 122, DE-A 198 28 183, DE-A 198 39 199, DE-A 198 40 586 und DE-A 198 47 115 herabgesetzt werden.

Darüber hinaus können die nach dem erfindungsgemäßen Verfahren zugänglichen wässrigen Copolymerisatdispersionen als Komponente bei der Herstellung von Klebstoffen, Dichtmassen, Kunststoffputzen, Papierstreichmassen, Faservliesen, Anstrichmitteln und Beschichtungsmitteln für organische Substrate sowie zur Modifizierung von mineralischen Bindemitteln oder Kunststoffen eingesetzt werden.

Ferner sind aus den erfindungsgemäßen wässrigen Copolymerisatdispersionen in einfacher Weise (beispielsweise Gefrier- oder Sprühtrockung) die entsprechenden Copolymerisatpulver zugänglich, welche sich ebenfalls vorteilhaft als Komponente bei der Herstellung von Klebstoffen, Dichtmassen, Kunststoffputzen, Papierstreichmassen, Faservliesen, Anstrichmitteln und Beschichtungsmitteln für organische Substrate sowie zur Modifizierung von mineralischen Bindemitteln oder Kunststoffen einsetzen lassen.

Folgende nicht einschränkende Beispiele sollen die Erfindung erläutern.

Herstellung der wässrigen Copolymerisatdispersionen

Copolymerisatdispersion CP1

In einem 5 l Druckreaktor, ausgerüstet mit einem MIG-Rührer und 4 Dosiereinrichtungen sowie einen Probennahmeventil wurden bei Raumtemperatur und unter Stickstoffatmosphäre 900 g entionisiertes Wasser, 100 g einer wässrigen Polystyrolsaat (Feststoffgehalt 33 Gew.-%, zahlenmittlerer Teilchendurchmesser 32 nm), 10 g Acrylsäure, 50 g einer 7 gew.-%igen Natriumpersulfatlösung, 45 g Styrol, 9 g einer 15 gew.-%igen wässrigen Natriumdodecylsulfat-Lösung vorgelegt. Anschließend wurde der Reaktorinhalt unter Rühren auf 95 °C aufgeheizt. Nach Erreichen von 95 °C wurden zeitgleich beginnend die Gesamtmenge an Zulauf 1 und Zulauf 2 innerhalb von 4 Stunden kontinuierlich mit gleichbleibenden Mengenströmen zudosiert. Daran anschließend ließ man den Reaktorinhalt noch 1 Stunde bei 95 °C nachreagieren. Anschließend entnahm man dem Reaktor über das Probennahmeventil eine kleine Probe (ca. 10 ml). Dann startete man zeitgleich die Zuläufe 3 und 4 und dosierte beide Zuläufe innerhalb von 2 Stunden kontinuierlich mit gleichbleibenden Mengenströmen. Danach kühlte man den Reaktionsansatz auf Raumtemperatur ab und entspannte den Druckbehälter auf Atmosphärendruck.

Zulauf 1:

homogene Emulsion aus

| | |
|---|---|
| 1000 g | Styrol |
| 900 g | 1,3-Butadien |

| | |
|---|---|
| 100 g | Acrylsäure |
| 10 g | trans-Aconitsäure |
| 500 g | entionisiertes Wasser |
| 10 g | einer 25 gew.-%igen wässrigen Natriumhydroxid-Lösung |
| 20 g | tert.-Dodecylcmercaptan und |
| 70 g | einer 15 gew.-%igen wässrigen Natriumdodecylsulfat-Lösung |

Zulauf 2:

450 g einer 4 gew.-%igen wässrigen Natriumpersulfat-Lösung

Zulauf 3:

45 g einer 10 gew.-%igen wässrigen Lösung von tert.-Butylhydroperoxid

Zulauf 4:

60 g einer 10 gew.-%igen wässrigen Lösung von Acetonbisulfit (molares 1:1-Additionsprodukt aus Aceton und Natriumhydrogensulfit)

Die erhaltene wässrige Copolymerisatdispersion CP1 wies einen Feststoffgehalt von 47,4 Gew.-%, bezogen auf das Gesamtgewicht der wässrigen Dispersion, auf. Die Viskosität betrug 80 mPas. Die Teilchengröße wurde zu 135 nm, der Reststyrolgehalt zu 43 ppm, der Restbutadiengehalt zu 53 ppm und der Gehalt an 4-Phenylcyclohexen (4-PCH) zu 34 ppm bestimmt.

Die Probe, welche vor der Dosierung der Zuläufe 3 und 4 entnommen wurde (Zwischenprobe), hatte einen Reststyrolgehalt von 8350 ppm, einen Restbutadiengehalt von 720 ppm und einen Gehalt an 4-PCH von 55 ppm.

Die Feststoffgehalte wurden generell bestimmt, indem eine definierte Menge der jeweiligen wässrigen Copolymerisatdispersion (ca. 5 g) bei 140 °C in einem Trockenschrank bis zur Gewichtskonstanz getrocknet wurde. Es wurden jeweils zwei separate Messungen durchgeführt. Die in den Beispielen angegebenen Werte stellen den Mittelwert dieser beiden Messergebnisse dar.

Die Bestimmung der Viskositäten der wässrigen Copolymerisatdispersionen erfolgte generell mit einem Brookfield-Viskosimeter "Brookfield RVT", Spindel 4, 100 UpM; Temperatur: 23 °C; Konzentration des Copolymerisats (Festgehalt) wie in Beispielen angegeben.

Die Restgehalte an Styrol, Butadien und 4-PCH wurden generell mittels Gaschromatographie bestimmt (Gerät: Autosystem GC mit HS40 von Perkin Elmer, Säule: DB-1 von J&W Scientific, 30 m).

Die mittleren Teilchendurchmesser der Copolymerisatteilchen wurden generell durch dynamische Lichtstreuung an einer 0,005 bis 0,01 gewichtsprozentigen wässrigen Copolymerisatdispersion bei 23 °C mittels eines Autosizer IIC der Fa. Malvern Instruments, England, ermittelt. Angegeben wird der mittlere Durchmesser der Kumulantenauswertung (cumulant z-average) der gemessenen Autokorrelationsfunktion (ISO-Norm 13321).

Copolymerisatdispersion CP2

Die Herstellung von Copolymerisatdispersion CP2 erfolgte analog der Herstellung von Copolymerisatdispersion CP1 mit dem Unterschied, dass cis-Aconitsäure anstelle von trans-Aconitsäure eingesetzt wurde.

Die erhaltene wässrige Copolymerisatdispersion CP2 wies einen Feststoffgehalt von 47,6 Gew.-%, bezogen auf das Gesamtgewicht der wässrigen Dispersion, auf. Die Viskosität betrug 80 mPas. Die Teilchengröße wurde zu 138 nm, der Reststyrolgehalt zu 48 ppm, der Restbutadiengehalt zu 57 ppm und der Gehalt an 4-PCH zu 30 ppm bestimmt.

Die Zwischenprobe hatte einen Reststyrolgehalt von 7925 ppm, einen Restbutadiengehalt von 750 ppm und einen Gehalt an 4-PCH von 50 ppm.

Copolymerisatdispersion VCP1 (Vergleichsbeispiel)

Die Herstellung von Copolymerisatdispersion VCP1 erfolgte analog der Herstellung von Copolymerisatdispersion CP1 mit dem Unterschied, dass Acrylsäure anstelle der trans-Aconitsäure eingesetzt wurde wurde.

Die erhaltene wässrige Copolymerisatdispersion VCP1 wies einen Feststoffgehalt von 47,1 Gew.-%, bezogen auf das Gesamtgewicht der wässrigen Dispersion, auf. Die Viskosität betrug 190 mPas. Die Teilchengröße wurde zu 133 nm, der Reststyrolgehalt zu 324 ppm, der Restbutadiengehalt zu 115 ppm und der Gehalt an 4-PCH zu 60 ppm bestimmt.

Die Zwischenprobe hatte einen Reststyrolgehalt von 13500 ppm, einen Restbutadiengehalt von 1450 ppm und einen Gehalt an 4-PCH von 85 ppm.

Anwendungstechnische Untersuchungen

Allgemeine Vorschrift zur Herstellung von Papierstreichmassen

Die Herstellung der Papierstreichmassen erfolgte durch Abmischen der in Tabelle 2 angegebenen Komponenten in der dort angegebenen Reihenfolge mittels eines Dissolvers. Die wechselnden Feststoffgehalte der eingesetzten Copolymerisatdispersionen CP1, CP2 und VCP1 wurden bei der Einsatzmenge berücksichtig und so bemessen, dass 10 Gew.-Teile Copolymerisat (bezogen auf 100 Gew.-Teile der Summe der anorganischen Füllstoffe/Pigmente) in der Formulierung enthalten waren. Mit einer 10 gew.-%igen wässrigen Lösung von Natriumhydroxid stellte man den pH-Wert der Papierstreichmassen auf 8,5 bis 9 ein. Nachfolgend wurden die Feststoffgehalte der Papierstreichmassen durch Zugabe von entionisiertem Wasser auf 66 Gew.-% eingestellt.

Tabelle 2 Formulierung der Papierstreichmassen

| Gew.-Teile | Komponente |
|---|---|
| | Teilmenge des entionisierten Wassers |
| 0,4 | des Polynatriumsalzes einer Polyacrylsäure mit einem Molekulargewicht von 4000 (Polysalz S der Fa. BASF AG) |
| 0,5 | Carboxymethylcellulose (Sterocoll® FD der Fa. BASF AG) |
| 70 | feinteilige Kreide (Hydrocarb® 95 ME der Fa. Omya AG) |
| 30 | feinteiliger Clay (Amazon Premium der Fa. Kaolin International B.V.) |
| 10 | Copolymerisat (als Feststoff gerechnet) pH-Werteinstellung mit 10 gew.-%iger wässriger Lösung von Natriumhydroxid |
| | Restmenge des entionisierten Wassers zum Einstellen des Feststoffgehaltes auf 66 Gew.-% |

Anschließend wurden die Viskositäten der erhaltenen wässrigen Papierstreichmassen bestimmt. Die Bestimmung der Viskositäten der wässrigen Papierstreichmassen erfolgte generell mit einem Brookfield-Viskosimeter "Brookfield RVT", Spindel 4, 20 UpM; Temperatur: 23 °C. Die ermittelten Viskositäten der wässrigen Papierstreichmassen sind in Tabelle 3 angegeben.

Allgemeine Vorschrift zur Papierbeschichtung

Als Rohpapier wurde ein holzfreies Streichrohpapier mit einem Flächengewicht von 70 $g/m^2$ verwendet. Der Auftrag der Streichmasse erfolgte einseitig mit 10 $g/m^2$ (als Feststoff gerechnet) auf einer Laborstreichmaschine (Auftragsverfahren: Walze, Dosierverfahren: Blade).

Die Papierbahnen wurden mittels einer IR-Trockeneinheit und Lufttrocknung getrocknet (8 IR-Strahler mit je 650 Watt, Durchlaufgeschwindigkeit 30 m/min).

Aus den beschichteten Papierbahnen wurden 35 cm x 20 cm große Teststreifen geschnitten. Anschließend lagerte man die Teststreifen 17 Stunden bei 23 °C und einer relativen Luftfeuchtigkeit von 50 % (DIN 50014-23/50-2). Daran anschließend wurden die Teststreifen mittels des Tisch-Laborkalanders K8/2, der Fa. Kleinewefers, Krefeld, bei einer Temperatur von 23 °C kalandriert. Dabei betrug der Liniendruck zwischen den Walzen 200 kN/cm Papierbreite und die Geschwindigkeit 10 m/min. Der Vorgang wurde viermal wiederholt.

Anwendungstechnische Prüfungen

a) Bestimmung der Trockenrupffestigkeit mit dem IGT-Probedruckgerät (IGT trocken)

Die Teststreifen wurden mit zunehmender Geschwindigkeit im Offsetverfahren bedruckt. Als Druckfarbe wurde Novavit 4F 713 Cyan der Fa. Kast & Ehinger GmbH verwendet. Die maximale Druckgeschwindigkeit betrug 200 cm/s. Der Farbauftrag erfolgte bei einem Liniendruck von 350 N/cm.

Bei der sogenannten Punktauswertung wird, vom ersten Rupfpunkt (also dem ersten Ausriss aus der Papierstreichmasse) ausgehend, der zehnte Rupfpunkt ausgezählt.

Die Trockenrupffestigkeit wird in cm/s, also der beim zehnten Rupfpunkt anliegenden Druckgeschwindigkeit angegeben. Dabei wird die Eignung des Copolymerisats als Bindemittel in Papierstreichmassen umso besser gewertet, je höher diese Druckgeschwindigkeit am zehnten Rupfpunkt ist.

b) Rupffestigkeit bei Mehrfachbedruckung (Offsettest)

Das Bedrucken der Teststreifen wurde mit einer konstanten Geschwindigkeit von 1 m/s durchgeführt und erfolgte bei einem Liniendruck von 200 N/cm.

Der Druckvorgang wurde nach 30 Sekunden wiederholt. Als Rupffestigkeit wird die Anzahl von Durchgängen angegeben, bis Rupfen auftritt. Dabei wird die Eignung des Copolymerisats als Bindemittel in Papierstreichmassen umso besser gewertet, je höher die Anzahl von Druckvorgängen bis zum erstem Rupfen ist.

Tabelle 3 Ergebnisse der anwendungstechnischen Prüfungen

| Copolymerisat-Dispersion | Viskosität der wässrigen Papierstreichmasse [mPas] | IGT trocken [cm/s] | Offsettest [Anzahl] |
|---|---|---|---|
| CP1 | 3140 | 96 | 4 |
| VCP1 | 3510 | 89 | 4 |
| CP2 | 3220 | 90 | 5 |

Wie aus der Ergebnistabelle 3 ersichtlich ist, weisen die wässrigen Papierstreichmassen, welche die erfindungsgemäßen wässrigen Copolymerisatdispersionen enthalten, deutlich geringere Viskositäten und die beschichteten Papiere bessere bzw. vergleichbare Werte für die Trockenrupffestigkeit bzw. den Offsettest auf.

## Patentansprüche

1. Verfahren zur Herstellung einer stabilen wässrigen Copolymerisatdispersion durch radikalisch initiierte wässrige Emulsionspolymerisation in einem Polymerisationsgefäß, **dadurch gekennzeichnet, dass** zur Emulsionspolymerisation ein Monomerengemisch, bestehend aus

   0,1 bis 10 Gew.-% Aconitsäure [Monomer A1],
   14,9 bis 80 Gew.-% wenigstens eines konjugierten aliphatischen C4-C9-Diens [Monomer A2], und
   19,9 bis 85 Gew.-% wenigstens einer vinylaromatischen Verbindung [Monomer A3],
   sowie gegebenenfalls
   0 bis 30 Gew.-% wenigstens einer weiteren, sich von den Monomeren A1, A2 und A3 unterscheidenden radikalisch copolymerisierbaren ethylenisch ungesättigten Verbindung [Monomer A4]

   eingesetzt wird und sich die Monomeren A1 bis A4 zu 100 Gew.-% addieren.

2. Verfahren nach Anspruch 1, **dadurch gekennzeichnet, dass** als Monomer A2 1,3-Butadien, als Monomer A3 Styrol und als Monomer A4 Acrylsäure und/oder Methacrylsäure eingesetzt wird.

3. Verfahren nach Anspruch 1 oder 2, **dadurch gekennzeichnet, dass** ≥ 80 Gew.-% des Monomerengemisches dem Polymerisationsgefäß unter Polymerisationsbedingungen kontinuierlich zugeführt wird.

4. Verfahren nach einem der Ansprüche 1 bis 3, **dadurch gekennzeichnet, dass** das Monomerengemisch in Form

einer wässrigen Monomerenemulsion eingesetzt wird.

5. Verfahren nach einem der Ansprüche 1 bis 4, **dadurch gekennzeichnet, dass** die Emulsionspolymerisation in Anwesenheit eines Saatlatex erfolgt.

6. Wässrige Copolymerisatdispersion erhältlich nach einem Verfahren gemäß einem der Ansprüche 1 bis 5.

7. Verwendung einer wässrigen Copolymerisatdispersion gemäß Anspruch 6 als Komponente bei der Herstellung von Klebstoffen, Dichtmassen, Kunststoffputzen, Papierstreichmassen, Faservliesen, Anstrichmitteln und Beschichtungsmitteln für organische Substrate sowie zur Modifizierung von mineralischen Bindemitteln oder Kunststoffen.

8. Copolymerisatpulver erhältlich aus einer wässrigen Copolymerisatdispersion gemäß Anspruch 6.

9. Verwendung von Copolymerisatpulver gemäß Anspruch 8 als Komponente bei der Herstellung von Klebstoffen, Dichtmassen, Kunststoffputzen, Papierstreichmassen, Faservliesen, Anstrichmitteln und Beschichtungsmitteln für organische Substrate sowie zur Modifizierung von mineralischen Bindemitteln oder Kunststoffen.

Europäisches Patentamt

# EUROPÄISCHER RECHERCHENBERICHT

Nummer der Anmeldung
EP 06 10 0835

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2 360 896 A (SARBACH DONALD V) 24. Oktober 1944 (1944-10-24) * Anspruch 2 * ----- | 1-9 | INV. C08F212/00 C08F236/04 C08F2/22 |
| A | GB 1 069 234 A (SHELL INTERNATIONALE RESEARCH MAATSCHAPPIJ N.V) 17. Mai 1967 (1967-05-17) * Ansprüche 1-3,5-9 * ----- | 1-9 | |
| A | JP 60 243102 A (DENKI KAGAKU KOGYO KK) 3. Dezember 1985 (1985-12-03) * das ganze Dokument * ----- | 1-9 | |
| D,A | DE 100 46 930 A1 (BASF AG) 18. April 2002 (2002-04-18) * das ganze Dokument * ----- | 1-9 | |
| | | | RECHERCHIERTE SACHGEBIETE (IPC) |
| | | | C08F |

Der vorliegende Recherchenbericht wurde für alle Patentansprüche erstellt

3

| Recherchenort | Abschlußdatum der Recherche | Prüfer |
|---|---|---|
| München | 6. Juni 2006 | Van Golde, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 06 10 0835

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-06-2006

| Im Recherchenbericht angeführtes Patentdokument | Datum der Veröffentlichung | Mitglied(er) der Patentfamilie | Datum der Veröffentlichung |
|---|---|---|---|
| US 2360896 A | 24-10-1944 | KEINE | |
| GB 1069234 A | 17-05-1967 | BE 678145 A | 21-09-1966 |
| | | DE 1694880 A1 | 21-10-1971 |
| | | DK 114931 B | 18-08-1969 |
| | | NL 6503697 A | 26-09-1966 |
| | | SE 337691 B | 16-08-1971 |
| | | US 3483275 A | 09-12-1969 |
| JP 60243102 A | 03-12-1985 | JP 1823731 C | 10-02-1994 |
| DE 10046930 A1 | 18-04-2002 | CA 2357510 A1 | 21-03-2002 |
| | | EP 1191044 A2 | 27-03-2002 |
| | | US 2002082374 A1 | 27-06-2002 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 4003422 A
- DE 10046930 A
- DE 10148494 A
- DE 10148496 A
- DE 10148497 A
- DE 10148511 A
- EP 496925 A
- US 4269749 A
- US 2520959 A
- US 3397165 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A


### In der Beschreibung aufgeführte Nicht-Patentliteratur


- Encyclopedia of Polymer Science and Engineering. 1987, vol. 8, 659
- **D.C. BLACKLEY.** *High Polymer Latices,* 1966, vol. 1, 35
- **H. WARSON.** *The Applications of Synthetic Resin Emulsions,* 1972, 246
- **D. DIEDERICH.** *Chemie in unserer Zeit,* 1990, vol. 24, 135-142
- Emulsion Polymerisation. Interscience Publishers, 1965
- **F. HÖLSCHER.** Dispersionen synthetischer Hochpolymerer. Springer-Verlag, 1969
- **HOUBEN-WEYL.** Methoden der organischen Chemie. Georg-Thieme-Verlag, 1961, vol. XIV/1, 411-420
- **HOUBEN-WEYL.** Methoden der organischen Chemie. Georg-Thieme-Verlag, 1961, vol. XIV/1, 192-208
- Polymerhandbook. John Weley & Sons, 1989, 133-141
- Analysis of Polymer Dispersions with an Eight-Cell-AUC-Multiplexer: High Resolution Particle Size Distribution and Density Gradient Techniques. **S.E. HARDING et al.** Biochemistry and Polymer Science. Royal Society of Chemistry, 1992, 147-175
- *Kolloid-Zeitschrift & Zeitschrift für Polymere,* vol. 190, 1
- **T.G. FOX.** *Bull. Am. Phys. Soc.,* 1956, vol. 1, 123
- Ull-mann's Encyclopädie der technischen Chemie. Verlag Chemie, 1980, vol. 19, 18
- Ullmann's Ecyclopedia of Industrial Chemistry. VCH, 1992, vol. A21, 169
- **J. BRANDRUP ; E.H. IMMERGUT.** Polymer Handbook. J. Wiley, 1966
- POLYMER HANDBOOK. J.Wiley, 1975
- POLYMER HANDBOOK. J. Wiley, 1989